# EUROPEAN PATENT APPLICATION

(11) **EP 3 337 095 A1**
(43) Date of publication of application: **20.06.2018**
(21) Application number: 15902545.1
(22) Date of filing: 31.08.2015
(51) Int. Cl.: H04L 12/24

(54) **RESOURCE MANAGEMENT METHOD AND DEVICE**

(71) Applicant: Huawei Technologies Co., Ltd., Longgang District Shenzhen, Guangdong 518129 (CN)
(72) Inventor: YANG, Xu, Shenzhen Guangdong 518129 (CN); XIA, Haitao, Shenzhen Guangdong 518129 (CN); YU, Fang, Shenzhen Guangdong 518129 (CN); LIU, Jianning, Shenzhen Guangdong 518129 (CN)
(74) Representative: Gill Jennings & Every LLP
(86) International application number: PCT/CN2015/088608
(87) International publication number: WO 2017/035738

(57) **Abstract**

A resource management method and apparatus are disclosed. A primary orchestrator determines resource management that is in a management domain of a secondary orchestrator and that needs to be performed by the secondary orchestrator (S101), and sends a resource management instruction to the secondary orchestrator (S102). The resource management instruction is used to instruct the secondary orchestrator to perform the resource management that is in the management domain of the secondary orchestrator and that needs to be performed by the secondary orchestrator. The primary orchestrator and the secondary orchestrator have different management domains, so as to be applicable to resource management across management domains of NFVOs.

## Description

### TECHNICAL FIELD

The present invention relates to the field of network communications technologies, and in particular, to a resource management method and apparatus.

### BACKGROUND

NFV (Network Function Virtualization, network functions virtualization) is a technology according to which a telecommunications network operator implements some telecommunications network functions in a general-purpose high-performance server, a switch, and a memory with reference to virtualization technologies in the IT field. According to this technology, the telecommunications network functions need to be implemented in a software manner and can run on hardware such as a general-purpose server, a switch, and a memory. In addition, an operation such as instantiation, scaling, or migration is automatically performed according to a requirement. Currently, virtualization of many dedicated network element devices such as a firewall, a router, a CG-NAT (Carrier Grade NAT, carrier grade network address translation), and the like in a telecommunications network can be implemented by using the NFV technology.

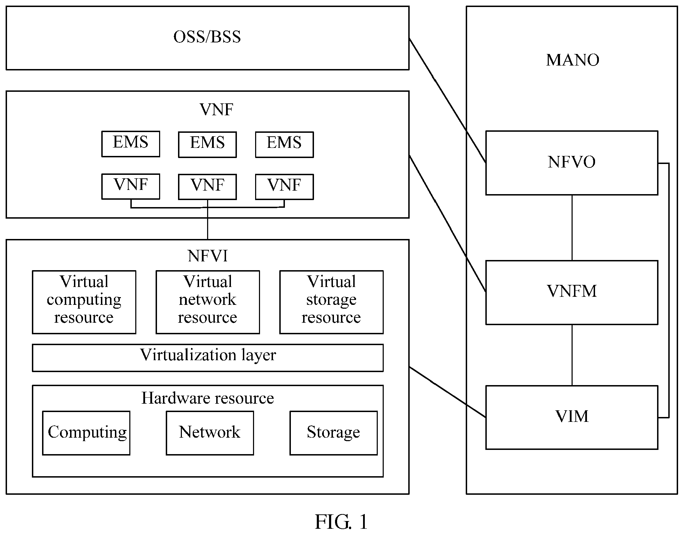

As shown in FIG. 1, FIG. 1 shows an NFV end-to-end architecture. The architecture mainly includes the following three parts:

### 1. VNF (Virtualized Network Function, virtualized network function):

A VNF is a virtualized network function, for example, a virtualized EPC (Evolved Packet Core, evolved packet core) node (an MME (Mobility Management Entity, mobility management entity), an SGW (Serving Gateway, serving gateway), a PGW (Packet Data Network Gateway, packet data network gateway), and the like). The VNF corresponds to a PNF (Physical Network Function, physical network function) in a traditional network. It is expected in the NFV that a VNF and a PNF of a same type can have same functions, performance, and external interfaces. The VNF may include multiple VNFCs (VNF Component, virtualized network function component). Usually, one VNFC runs on one VM (Virtualized Machine, virtual machine). Therefore, one VNF may include one or more VMs in deployment.

An EMS (Element Management System, element management system) performs a traditional FCAPS (Fault management, Configuration management, Account management, Performance management, Security management, fault, configuration, accounting, performance, and security management) function for the VNF.

### 2. NFVI (NFV Infrastructure, NFV infrastructure):

The NFVI provides hardware and virtual resources that are used to run an entire system. The NFVI includes hardware resources (including three parts: computing, network, and storage), a virtualization layer (which virtualizes the hardware resources into a resource pool), and virtual resources (also including three parts: computing, network, and storage).

### 3. MANO (Management and Orchestration, management and orchestration):

The MANO mainly includes three entities:
a VIM (Virtualized Infrastructure Manager, virtualized infrastructure manager): The VIM is a management unit of the NFVI and a function of the VIM includes hardware resource management and virtualized resource management;
an NFVO (NFV Orchestrator, NFV orchestrator): The NFVO is responsible for performing lifecycle management on an NS (Network Service, network service, which is a service unit that is formed by multiple VNFs, for example, an EPC) and performing orchestration and management on resources of an entire NFV system (including hardware resources and software resources); and
a VNFM (VNF Manager, VNF manager): The VNFM is responsible for performing lifecycle management on the VNF.

An OSS/BSS (Operation Support System/Business Support System, operations support system/business support system) shown in FIG. 1 is an OSS/BSS of an operator. The OSS/BSS is not included in NFV system components and belongs to an external entity having a relationship with the NFV system.

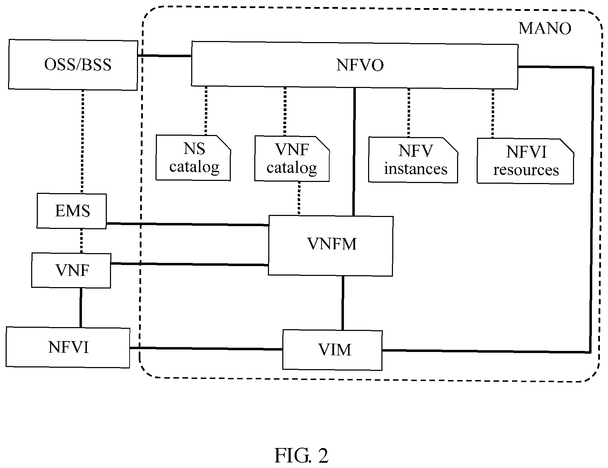

Currently, standardization of the NFV focuses on the MANO. As shown in FIG. 2, FIG. 2 is a detailed architecture of an MANO. The architecture is basically the same as that in the previous section. However, there are four newly added entities: an NS catalog (Network Service Catalog, network service catalog), a VNF catalog (catalog), NFV instances (instances), and NFVI resources (resources). The entities are functional modules for storing NS information, VNF information, a software package, and a running status in the MANO, where
NS catalog: store all on-boarded (on-board) NSD (NS Descriptor, NS descriptor) information;
VNF catalog: store all on-boarded VNF packages (software packages including a VNFD (VNF Descriptor, VNF descriptor), a virtual machine image, and the like);
NFV instances: store status information of all running instances such as an NS and a VNF, for example, an allocated network address and an operation record; and
NFVI resources: store all NFVI resource statuses, including an available/reserved/allocated NFVI resource.

In an actual NFV MANO application, there is a mapping relationship between a management domain of an NFVO and an operator network domain. For example, for an operator in a small or medium-sized country, a management domain of an NFVO can be mapped to a national network of the operator. However, for an operator in a superpower such as China or America, a management domain of an NFVO may be mapped to only a network of a provincial company.

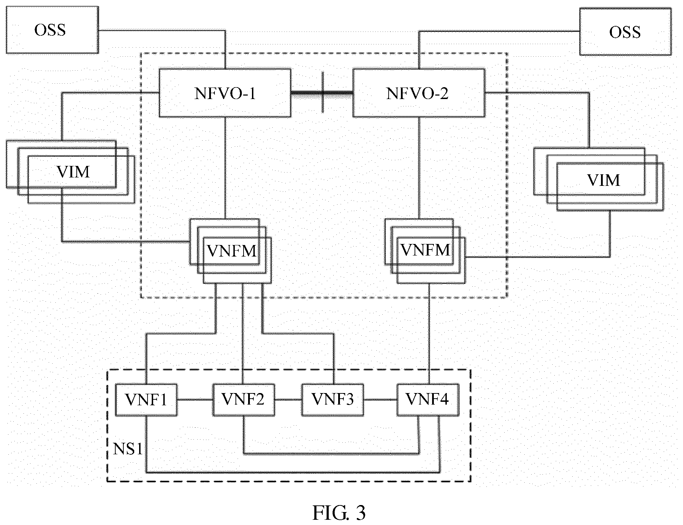

It is founda through research that: in some application scenarios, for example, when an NFV technology is used in an enterprise network of a global enterprise, or a VNF of an inactive belt is selected to provide reliable redundancy backup for a VNF of a zone in an active tsunami and earthquake belt (the active belt and the inactive belt usually cross different countries or different provinces), an NS needs to be deployed in different management domains of NFVOs. As shown in FIG. 3, two NFVOs (NFVO 1 and NFVO 2) having different management domains implement NS deployment across NFVO domains by using an interface in a horizontal direction (a bold line between the NFVO 1 and the NFVO 2 in FIG. 3). In the figure, a VNF 1, a VNF 2, a VNF 3, and a VNF 4 form an NS together. The VNF 1 to the VNF 3 are deployed in the management domain of the NFVO 1, and the VNF 4 is deployed in the management domain of the NFVO 2.

In an NFV standard in the prior art, resource management relates to only one management domain of an NFVO. However, the standard is not applicable to resource management across management domains of NFVOs.

### SUMMARY

In view of this, the present invention provides a resource management method and apparatus, so as to be applicable to resource management across management domains of NFVOs. Specific solutions thereof are as follows:
According to a first possible implementation of a first aspect of this application, this application provides a resource management method, and the method includes:
determining, by a primary orchestrator, resource management that is in a management domain of a secondary orchestrator and that needs to be performed by the secondary orchestrator; and
sending a resource management instruction to the secondary orchestrator, where the resource management instruction is used to instruct the secondary orchestrator to perform the resource management that is in the management domain of the secondary orchestrator and that needs to be performed by the secondary orchestrator, where
the primary orchestrator and the secondary orchestrator have different management domains.

With reference to a second possible implementation of the first aspect, the sending a resource management instruction to the secondary orchestrator specifically includes:
sending an instruction for querying availability of a resource in the management domain of the secondary orchestrator to the secondary orchestrator.

With reference to a third possible implementation of the first aspect, the sending a resource management instruction to the secondary orchestrator specifically includes:
sending an instruction for reserving a resource in the management domain of the secondary orchestrator to the secondary orchestrator.

With reference to a fourth possible implementation of the first aspect, the sending a resource management instruction to the secondary orchestrator specifically includes:
sending a resource quota application request to the secondary orchestrator.

With reference to a fifth possible implementation of the first aspect, the sending a resource management instruction to the secondary orchestrator specifically includes:
sending a resource quota adjustment request to the secondary orchestrator.

With reference to a sixth possible implementation of the first aspect, after the sending a resource management instruction to the secondary orchestrator, the method further includes:
receiving a resource management result fed back by the secondary orchestrator.

According to a first possible implementation of a second aspect of this application, this application provides another resource management method, and the method includes:
receiving, by a secondary orchestrator, a resource management instruction sent by a primary orchestrator, where the resource management instruction is used to instruct the secondary orchestrator to perform resource management that is in a management domain of the secondary orchestrator and that needs to be performed by the secondary orchestrator; and
performing the resource management that is in the management domain of the secondary orchestrator and that needs to be performed by the secondary orchestrator, where
the primary orchestrator and the secondary orchestrator have different management domains.

With reference to a second possible implementation of the second aspect, the receiving, by a secondary orchestrator, a resource management instruction sent by a primary orchestrator specifically includes:
receiving, by the secondary orchestrator, an instruction for querying availability of a resource in the management domain of the secondary orchestrator that is sent by the primary orchestrator.

With reference to a third possible implementation of the second aspect, the performing the resource management that is in the management domain of the secondary orchestrator and that needs to be performed by the secondary orchestrator specifically includes:
initiating, by the secondary orchestrator, the instruction for querying availability of a resource in the management domain of the secondary orchestrator to a VIM (virtualized infrastructure manager) in the management domain of the secondary orchestrator; and
receiving a query result returned by the VIM in the management domain of the secondary orchestrator.

With reference to a fourth possible implementation of the second aspect, after the receiving a query result returned by the VIM in the domain to which the secondary orchestrator belongs, the method further includes:
feeding back the query result to the primary orchestrator.

With reference to a fifth possible implementation of the second aspect, the receiving, by a secondary orchestrator, a resource management instruction sent by a primary orchestrator specifically includes:
receiving, by the secondary orchestrator, an instruction for reserving a resource in the management domain of the secondary orchestrator that is sent by the primary orchestrator.

With reference to a sixth possible implementation of the second aspect, the performing the resource management that is in the management domain of the secondary orchestrator and that needs to be performed by the secondary orchestrator specifically includes:
initiating, by the secondary orchestrator, the instruction for reserving a resource in the management domain of the secondary orchestrator to a VIM (virtualized infrastructure manager) in the management domain of the secondary orchestrator; and
receiving reserved resource information returned by the VIM in the management domain of the secondary orchestrator.

With reference to a seventh possible implementation of the second aspect, after the receiving reserved resource information returned by the VIM in the management domain of the secondary orchestrator, the method further includes:
feeding back the reserved resource information to the primary orchestrator.

With reference to an eighth possible implementation of the second aspect, the receiving, by a secondary orchestrator, a resource management instruction sent by a primary orchestrator specifically includes:
receiving, by the secondary orchestrator, a resource quota application request sent by the primary orchestrator.

With reference to a ninth possible implementation of the second aspect, the performing the resource management that is in the management domain of the secondary orchestrator and that needs to be performed by the secondary orchestrator specifically includes:
sending, by the secondary orchestrator, the resource quota application request to a VIM in the management domain of the secondary orchestrator;
receiving, by the secondary orchestrator, an allocated quota value returned by the VIM in the management domain of the secondary orchestrator; and
feeding back, by the secondary orchestrator, the allocated quota value to the primary orchestrator, so that after receiving a lifecycle management request, the primary orchestrator performs the resource management in the management domain of the secondary orchestrator according to the allocated quota value.

With reference to a tenth possible implementation of the second aspect, the receiving, by a secondary orchestrator, a resource management instruction sent by a primary orchestrator specifically includes:
receiving, by the secondary orchestrator, a resource quota adjustment request sent by the primary orchestrator.

With reference to an eleventh possible implementation of the second aspect, the performing the resource management that is in the management domain of the secondary orchestrator and that needs to be performed by the secondary orchestrator specifically includes:
sending, by the secondary orchestrator, the resource quota adjustment request to a VIM in the management domain of the secondary orchestrator; and
receiving, by the secondary orchestrator, an adjustment result returned by the VIM in the management domain of the secondary orchestrator.

According to a first possible implementation of a third aspect of this application, this application provides a resource management apparatus, and the apparatus includes:
a determining unit, configured to determine, by a primary orchestrator, resource management that is in a management domain of a secondary orchestrator and that needs to be performed by the secondary orchestrator; and
a sending unit, configured to send a resource management instruction to the secondary orchestrator, where the resource management instruction is used to instruct the secondary orchestrator to perform the resource management that is in the management domain of the secondary orchestrator and that needs to be performed by the secondary orchestrator, where
the primary orchestrator and the secondary orchestrator have different management domains.

With reference to a second possible implementation of the third aspect, the sending unit is specifically configured to:
send an instruction for querying availability of a resource in the management domain of the secondary orchestrator to the secondary orchestrator.

With reference to a third possible implementation of the third aspect, the sending unit is specifically configured to:
send an instruction for reserving a resource in the management domain of the secondary orchestrator to the secondary orchestrator.

With reference to a fourth possible implementation of the third aspect, the sending unit is specifically configured to:
send a resource quota application request to the secondary orchestrator.

With reference to a fifth possible implementation of the third aspect, the sending unit is specifically configured to:
send a resource quota adjustment request to the secondary orchestrator.

With reference to a sixth possible implementation of the third aspect, the apparatus further includes:
a receiving unit, configured to receive a resource management result fed back by the secondary orchestrator.

According to a first possible implementation of a fourth aspect of this application, this application provides a resource management apparatus, and the apparatus includes:
a receiving unit, configured to receive, by a secondary orchestrator, a resource management instruction sent by a primary orchestrator, where the resource management instruction is used to instruct the secondary orchestrator to perform resource management that is in a management domain of the secondary orchestrator and that needs to be performed by the secondary orchestrator; and
an execution unit, configured to perform the resource management that is in the management domain of the secondary orchestrator and that needs to be performed by the secondary orchestrator, where
the primary orchestrator and the secondary orchestrator have different management domains.

With reference to a second possible implementation of the fourth aspect, the receiving unit is specifically configured to:
receive, by the secondary orchestrator, an instruction for querying availability of a resource in the management domain of the secondary orchestrator that is sent by the primary orchestrator.

With reference to a third possible implementation of the fourth aspect, the execution unit is specifically configured to:
initiate, by the secondary orchestrator, the instruction for querying availability of a resource in the management domain of the secondary orchestrator to a VIM (virtualized infrastructure manager) in the management domain of the secondary orchestrator; and
receive a query result returned by the VIM in the management domain of the secondary orchestrator.

With reference to a fourth possible implementation of the fourth aspect, the apparatus further includes:
a first feedback unit, configured to feed back the query result to the primary orchestrator.

With reference to a fifth possible implementation of the fourth aspect, the receiving unit is specifically configured to:
receive, by the secondary orchestrator, an instruction for reserving a resource in the management domain of the secondary orchestrator that is sent by the primary orchestrator.

With reference to a sixth possible implementation of the fourth aspect, the execution unit is specifically configured to:
initiate, by the secondary orchestrator, the instruction for reserving a resource in the management domain of the secondary orchestrator to a VIM (virtualized infrastructure manager) in the management domain of the secondary orchestrator; and
receive reserved resource information returned by the VIM in the management domain of the secondary orchestrator.

With reference to a seventh possible implementation of the fourth aspect, the apparatus further includes:
a second feedback unit, configured to feed back the reserved resource information to the primary orchestrator.

With reference to an eighth possible implementation of the fourth aspect, the receiving unit is specifically configured to:
receive, by the secondary orchestrator, a resource quota application request sent by the primary orchestrator.

With reference to a ninth possible implementation of the fourth aspect, the execution unit is specifically configured to:
send, by the secondary orchestrator, the resource quota application request to a VIM in the management domain of the secondary orchestrator;
receive, by the secondary orchestrator, an allocated quota value returned by the VIM in the management domain of the secondary orchestrator; and
feed back, by the secondary orchestrator, the allocated quota value to the primary orchestrator, so that after receiving a lifecycle management request, the primary orchestrator performs the resource management in the management domain of the secondary orchestrator according to the allocated quota value.

With reference to a tenth possible implementation of the fourth aspect, the receiving unit is specifically configured to:
receive, by the secondary orchestrator, a resource quota adjustment request sent by the primary orchestrator.

With reference to an eleventh possible implementation of the fourth aspect, the execution unit is specifically configured to: send, by the secondary orchestrator, the resource quota adjustment request to a VIM in the management domain of the secondary orchestrator; and
receive, by the secondary orchestrator, an adjustment result returned by the VIM in the management domain of the secondary orchestrator.

It can be seen from the foregoing technical solutions that, in the resource management method and apparatus of this application, the primary orchestrator determines the resource management that is in the management domain of the secondary orchestrator and that needs to be performed by the secondary orchestrator, and sends the resource management instruction to the secondary orchestrator. The resource management instruction is used to instruct the secondary orchestrator to perform the resource management that is in the management domain of the secondary orchestrator and that needs to be performed by the secondary orchestrator. The primary orchestrator and the secondary orchestrator have different management domains, so as to be applicable to resource management across management domains of NFVOs.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an NFV end-to-end architecture;
FIG. 2 is a schematic diagram of a detailed architecture of an MANO;
FIG. 3 is a schematic architectural diagram in which an NS is deployed in different management domains of NFVOs;
FIG. 4 is a flowchart of Embodiment 1 of a resource management method disclosed in the present invention;
FIG. 5 is a flowchart of Embodiment 2 of a resource management method disclosed in the present invention;
FIG. 6 is a schematic signaling exchange diagram of Embodiment 1 of a resource management method disclosed in the present invention;
FIG. 7 is a schematic signaling exchange diagram of Embodiment 2 of a resource management method disclosed in the present invention;
FIG. 8 is a schematic signaling exchange diagram of Embodiment 3 of a resource management method disclosed in the present invention;
FIG. 9 is a structural diagram of Embodiment 1 of a resource management apparatus disclosed in the present invention;
FIG. 10 is a structural diagram of Embodiment 2 of a resource management apparatus disclosed in the present invention; and
FIG. 11 is a structural diagram of a computing node according to this application.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and the foregoing drawings, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

For ease of description, one primary orchestrator and one secondary orchestrator are used as examples in the embodiments of the present invention. However, based on the solutions of this application, an application scenario of one primary orchestrator and multiple secondary orchestrators also falls within the protection scope of the solutions of this application. It should be noted that the primary orchestrator and the secondary orchestrator have different management domains. In addition, both the primary orchestrator and the secondary orchestrator may be specifically an NFVO; or certainly, the primary orchestrator and the secondary orchestrator may be specifically another entity having resource management and orchestration functions, for example, an NSO (Network Service Orchestrator, network service orchestrator) and an RO (Resource Orchestrator, resource orchestrator). The NSO and the RO are sub-orchestrators obtained after division of an NFVO entity. The NSO is responsible for network service management and orchestration, and the RO is responsible for virtual resource management and orchestration. This is not limited in this application. The primary orchestrator may be any one of an NFVO, an NSO, or an RO. The secondary orchestrator may also be any one of an NFVO, an NSO, or an RO.

Using an example in which the primary orchestrator and the secondary orchestrator are both an NFVO, as shown in FIG. 3, two NFVOs (NFVO 1 and NFVO 2) having different management domains implement NS deployment across NFVO domains by using an interface in a horizontal direction (a bold line between the NFVO 1 and the NFVO 2 in FIG. 3). It should be noted that a primary-secondary relationship between the orchestrators is determined by a creator/dominant party of an NS across the NFVO domains. For different NSs managed by a same orchestrator, the orchestrator may be a primary orchestrator or may be a secondary orchestrator. Assuming that an OSS (or a manager) in FIG. 3 performs an instantiation process of an NS 1 by using an NFVO 1, the NFVO 1 is set to a primary orchestrator and an NFVO 2 is set to a secondary orchestrator. In the figure, a VNF 1, a VNF 2, a VNF 3, and a VNF 4 form the NS 1 together. The VNF 1 to the VNF 3 are deployed in the management domain of the NFVO 1, and the VNF 4 is deployed in the management domain of the NFVO 2.

The following describes the technical solutions of this application in detail by using the embodiments.

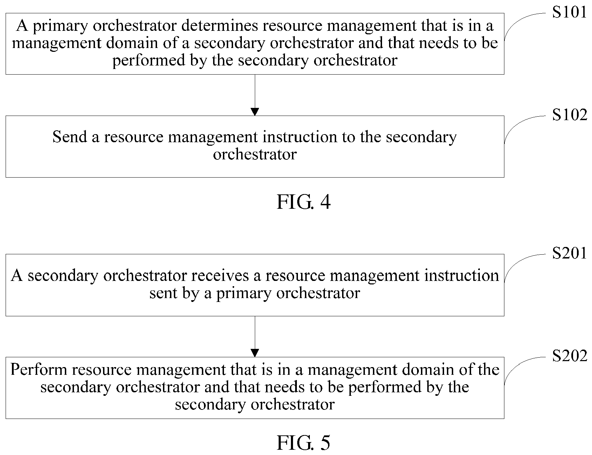

Referring to FIG. 4, FIG. 4 is a flowchart of Embodiment 1 of a resource management method disclosed in the present invention. The method is applied to a primary orchestrator and specifically includes the following steps.
S101: The primary orchestrator determines resource management that is in a management domain of a secondary orchestrator and that needs to be performed by the secondary orchestrator.

Using FIG. 3 as an example, the NFV1 belongs to the management domain of the NFVO 1. Assuming that the NFV 1 needs to be extended but resources in the NFVO 1 are insufficient, if allowed by a policy, the NFVO 1 may attempt to apply for a resource to the NFVO 2 for extension. An extended part is resource management that is determined by the NFVO 1 as resource management in the management domain of the NFVO 2 and that needs to be performed by the NFVO 2.
S102: Send a resource management instruction to the secondary orchestrator, where the resource management instruction is used to instruct the secondary orchestrator to perform the resource management that is in the management domain of the secondary orchestrator and that needs to be performed by the secondary orchestrator.

It should be noted that the resource management instruction sent to the secondary orchestrator may be specifically an instruction for querying availability of a resource in the management domain of the secondary orchestrator, or an instruction for reserving a resource in the management domain of the secondary orchestrator, or a resource quota application request, or a resource quota adjustment request.

It should be further noted that after the secondary orchestrator performs the resource management that is in the management domain of the secondary orchestrator and that needs to be performed by the secondary orchestrator, the secondary orchestrator feeds back a resource management result to the primary orchestrator, and the primary orchestrator receives the resource management result, thereby helping the primary orchestrator coordinate resource usage during NS instantiation.

According to the resource management method in this embodiment, the primary orchestrator determines the resource management that is in the management domain of the secondary orchestrator and that needs to be performed by the secondary orchestrator, and sends the resource management instruction to the secondary orchestrator. The resource management instruction is used to instruct the secondary orchestrator to perform the resource management that is in the management domain of the secondary orchestrator and that needs to be performed by the secondary orchestrator. The primary orchestrator and the secondary orchestrator have different management domains, so as to be applicable to resource management across management domains of NFVOs.

Referring to FIG. 5, FIG. 5 is a flowchart of Embodiment 2 of a resource management method disclosed in the present invention. The method is applied to a secondary orchestrator and specifically includes the following steps.
S201: The secondary orchestrator receives a resource management instruction sent by a primary orchestrator.

The resource management instruction is used to instruct the secondary orchestrator to perform resource management that is in a management domain of the secondary orchestrator and that needs to be performed by the secondary orchestrator.

Specifically, when the resource management is used to query a resource, the resource management instruction is an instruction for querying availability of a resource in the management domain of the secondary orchestrator. When the resource management is used to reserve a resource, the resource management instruction is an instruction for reserving a resource in the management domain of the secondary orchestrator. Alternatively, when the resource management is resource quota management, the resource management instruction is a resource quota application request or a resource quota adjustment request.
S202. Perform resource management that is in a management domain of the secondary orchestrator and that needs to be performed by the secondary orchestrator.

When the resource management instruction is the instruction for querying availability of a resource in the management domain of the secondary orchestrator, the performing the resource management that is in the management domain of the secondary orchestrator and that needs to be performed by the secondary orchestrator includes the following steps:
initiating, by the secondary orchestrator, the instruction for querying availability of a resource in the management domain of the secondary orchestrator to a VIM in the management domain of the secondary orchestrator;
receiving a query result returned by the VIM in the management domain of the secondary orchestrator; and
feeding back the query result to the primary orchestrator.

When the resource management instruction is the instruction for reserving a resource in the management domain of the secondary orchestrator, the performing the resource management that is in the management domain of the secondary orchestrator and that needs to be performed by the secondary orchestrator includes the following steps:
initiating, by the secondary orchestrator, the instruction for reserving a resource in the management domain of the secondary orchestrator to a VIM in the management domain of the secondary orchestrator;
receiving reserved resource information returned by the VIM in the management domain of the secondary orchestrator, where
specifically, the reserved resource information may include a reserved resource ID, a resource type, a resource size, and the like; and
feeding back the reserved resource information to the primary orchestrator.

When the resource management instruction is the resource quota application request, the performing the resource management that is in the management domain of the secondary orchestrator and that needs to be performed by the secondary orchestrator includes the following steps:
sending, by the secondary orchestrator, the resource quota application request to a VIM in the management domain of the secondary orchestrator;
receiving, by the secondary orchestrator, an allocated quota value returned by the VIM in the management domain of the secondary orchestrator; and
feeding back, by the secondary orchestrator, the allocated quota value to the primary orchestrator, so that after receiving a lifecycle management request, the primary orchestrator performs the resource management in the management domain of the secondary orchestrator according to the allocated quota value.

The lifecycle management includes instantiation (instantiation), scaling (scaling), termination (termination), updating, and the like. The lifecycle management may be lifecycle management of a VNF, or may be lifecycle management of an NS.

When the resource management instruction is the resource quota adjustment request, the performing the resource management that is in the management domain of the secondary orchestrator and that needs to be performed by the secondary orchestrator includes the following steps:
sending, by the secondary orchestrator, the resource quota adjustment request to a VIM in the management domain of the secondary orchestrator;
receiving, by the secondary orchestrator, an adjustment result returned by the VIM in the management domain of the secondary orchestrator, for example, an adjusted resource quota value or a resource quota value change; and
feeding back, by the secondary orchestrator, the adjustment result to the primary orchestrator, so that after receiving a life-cycle management request, the primary orchestrator performs the resource management in the management domain of the secondary orchestrator according to the adjustment result.

According to the resource management method in this embodiment, the secondary orchestrator receives the resource management instruction sent by the primary orchestrator. The resource management instruction is used to instruct the secondary orchestrator to perform the resource management that is in the management domain of the secondary orchestrator and that needs to be performed by the secondary orchestrator. The primary orchestrator and the secondary orchestrator have different management domains, so as to be applicable to resource management across management domains of NFVOs.

Based on the foregoing embodiments disclosed in the present invention, the following describes, by using signaling exchange between the primary orchestrator and the secondary orchestrator, the resource management method in detail disclosed in the present invention.

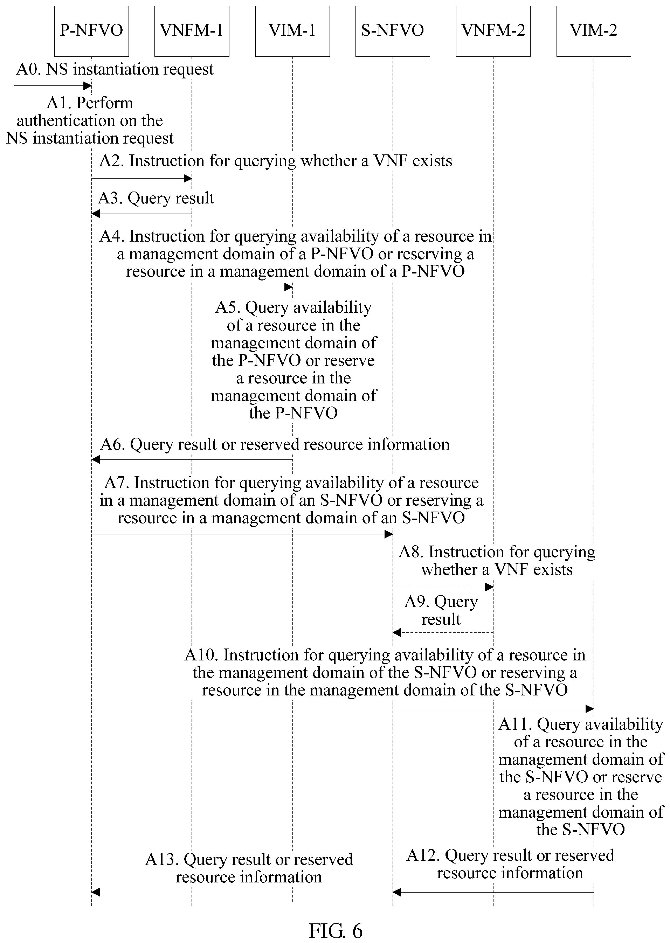

Referring to FIG. 6, FIG. 6 is a schematic signaling exchange diagram of Embodiment 1 of a resource management method disclosed in the present invention. In this embodiment, a primary orchestrator is represented by P-NFVO, a secondary orchestrator is represented by S-NFVO, a VIM in a management domain of the primary orchestrator is represented by VIM-1, a VIM in a management domain of the secondary orchestrator is represented by VIM-2, a VNFM in the management domain of the primary orchestrator is represented by VNFM-1, and a VNFM in the management domain of the secondary orchestrator is represented by VNFM-2. The method is applied after an NS instantiation request is received and specifically includes the following steps.
A0: The P-NFVO receives an NS instantiation request.
A1: The P-NFVO performs authentication on the NS instantiation request.
A2: The P-NFVO sends an instruction for querying whether a VNF exists to the VNFM-1.
A3: The VNFM-1 sends a query result to the P-NFVO.
A4: The P-NFVO sends an instruction for querying availability of a resource in the management domain of the P-NFVO or reserving a resource in the management domain of the P-NFVO to the VIM-1.
A5: The VIM-1 queries availability of a resource in the management domain of the P-NFVO or reserves a resource in the management domain of the P-NFVO.
A6: The VIM-1 returns a query result or reserved resource information to the P-NFVO.
A7: The P-NFVO sends an instruction for querying availability of a resource in the management domain of the S-NFVO or reserving a resource in the management domain of the S-NFVO to the S-NFVO.
A8: The S-NFVO sends an instruction for querying whether a VNF exists to the VNFM-2.
A9: The VNFM-2 sends a query result to the S-NFVO.

It should be noted that A8 and A9 are optional processes in the entire process.
A10: The S-NFVO sends the instruction for querying availability of a resource in the management domain of the S-NFVO or reserving a resource in the management domain of the S-NFVO to the VIM-2.

After receiving the instruction for querying availability of a resource in the management domain of the S-NFVO or reserving a resource in the management domain of the S-NFVO, the S-NFVO may perform authentication on the instruction, where the instruction is sent by the P-NFVO. The authentication herein includes identity authentication of the P-NFVO and correctness verification of content of the instruction.
A11: The VIM-2 queries availability of a resource in the management domain of the S-NFVO or reserves a resource in the management domain of the S-NFVO.
A12: The VIM-2 returns a query result or reserved resource information to the S-NFVO.
A13: The S-NFVO returns the query result or the reserved resource information to the P-NFVO.

The P-NFVO continues to perform an NS instantiation process according to the query result or the reserved resource information. Specifically, the P-NFVO may separately send a local instantiation request to the VIM-1, and send a cross-domain instantiation request to the S-NFVO. Because this part of content does not fall within the scope of this application, a specific implementation thereof is not limited in this embodiment.

It should be noted that the P-NFVO may modify the reserved resource information returned by the S-NFVO, so as to indicate that a resource described in the reserved resource information belongs to another management domain of an NFVO. When resource allocation is performed according to the reserved resource information, the P-NFVO needs to convert the reserved resource information to an original value, thereby facilitating domain identification of the S-NFVO.

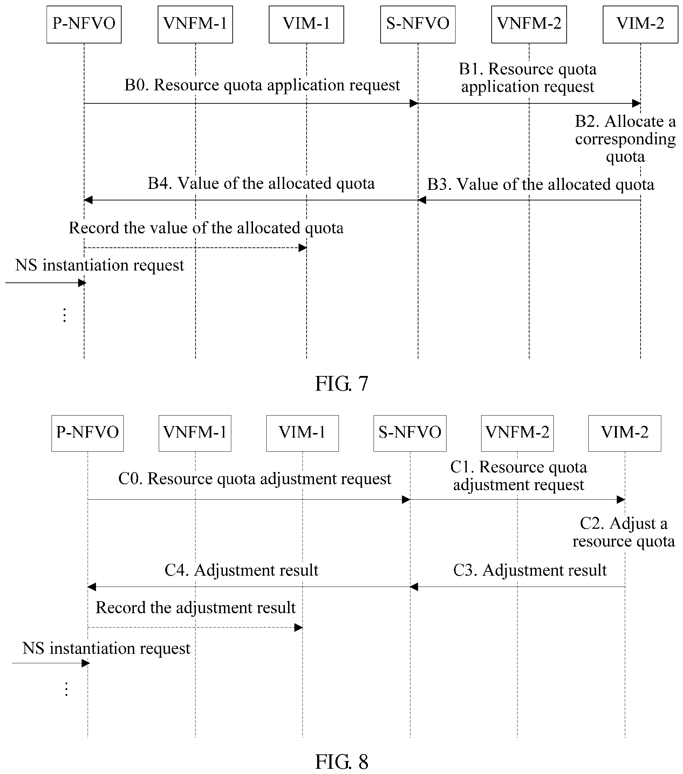

Referring to FIG. 7, FIG. 7 is a schematic signaling exchange diagram of Embodiment 2 of a resource management method disclosed in the present invention. In this embodiment, a primary orchestrator is represented by P-NFVO, a secondary orchestrator is represented by S-NFVO, a VIM in a management domain of the primary orchestrator is represented by VIM-1, a VIM in a management domain of the secondary orchestrator is represented by VIM-2, a VNFM in the management domain of the primary orchestrator is represented by VNFM-1, and a VNFM in the management domain of the secondary orchestrator is represented by VNFM-2. The method is applied before an NS instantiation request is received, for example, when the P-NFVO establishes a connection to the S-NFVO, or during a previous resource query/reservation process. The method specifically includes the following steps.
B0: The P-NFVO sends a resource quota application request to the S-NFVO.
B1: The S-NFVO sends the resource quota application request to the VIM-2.

Before the S-NFVO sends the resource quota application request to the VIM-2, the S-NFVO performs authentication on the resource quota application request. The authentication includes identity authentication of the P-NFVO and correctness verification of content of the request.
B2: The VIM-2 allocates a corresponding quota.

The VIM-2 allocates a corresponding quota according to a policy or a prior agreement.
B3: The VIM-2 sends an allocated quota value to the S-NFVO.
B4: The S-NFVO sends the allocated quota value to the P-NFVO.

Optionally, the P-NFVO stores the allocated quota value in the VIM-1, so that the VIM-1 obtains global available resource information.

It should be noted that, for resource use in a subsequent NS instantiation process, available resource information may be directly obtained by querying information of the P-NFVO or the VIM-1 without initiating a related request to the S-NFVO.

It should be further noted that when a quota requirement changes (for example, a quota is insufficient and needs to be increased), the P-NFVO may initiate a resource quota adjustment request to the S-NFVO, to change a quota value. Referring to FIG. 8, FIG. 8 is a schematic signaling exchange diagram of Embodiment 3 of a resource management method disclosed in the present invention. In this embodiment, a primary orchestrator is represented by P-NFVO, a secondary orchestrator is represented by S-NFVO, a VIM in a management domain of the primary orchestrator is represented by VIM-1, a VIM in a management domain of the secondary orchestrator is represented by VIM-2, a VNFM in the management domain of the primary orchestrator is represented by VNFM-1, and a VNFM in the management domain of the secondary orchestrator is represented by VNFM-2. The method is applied before an NS instantiation request is received, for example, when the P-NFVO establishes a connection to the S-NFVO, or during a previous resource query/reservation process. The method specifically includes the following steps.
C0: The P-NFVO sends a resource quota adjustment request to the S-NFVO.
C1: The S-NFVO sends the resource quota adjustment request to the VIM-2.

Before the S-NFVO sends the resource quota adjustment request to the VIM-2, the S-NFVO performs authentication on the resource quota adjustment request. The authentication includes identity authentication of the P-NFVO and correctness verification of content of the request.
C2: The VIM-2 adjusts a resource quota.
C3: The VIM-2 sends an adjustment result to the S-NFVO.

The adjustment result is specifically an adjusted resource quota value or a resource quota value change.
C4: The S-NFVO sends the adjustment result to the P-NFVO.

In this embodiment, the resource management is implemented in a quota manner, so that cross-domain resource management is localized, thereby avoiding an additional processing delay caused due to repeated queries during resource use for each time. In addition, introduction of the quota also helps the S-NFVO explicitly limit resource use in the P-NFVO domain.

The method is described in detail in the disclosed embodiments of the present invention, and the method of the present invention can be implemented by using multiple forms of apparatuses. Therefore, the present invention further discloses an apparatus, and the apparatus is described in detail below by providing specific embodiments.

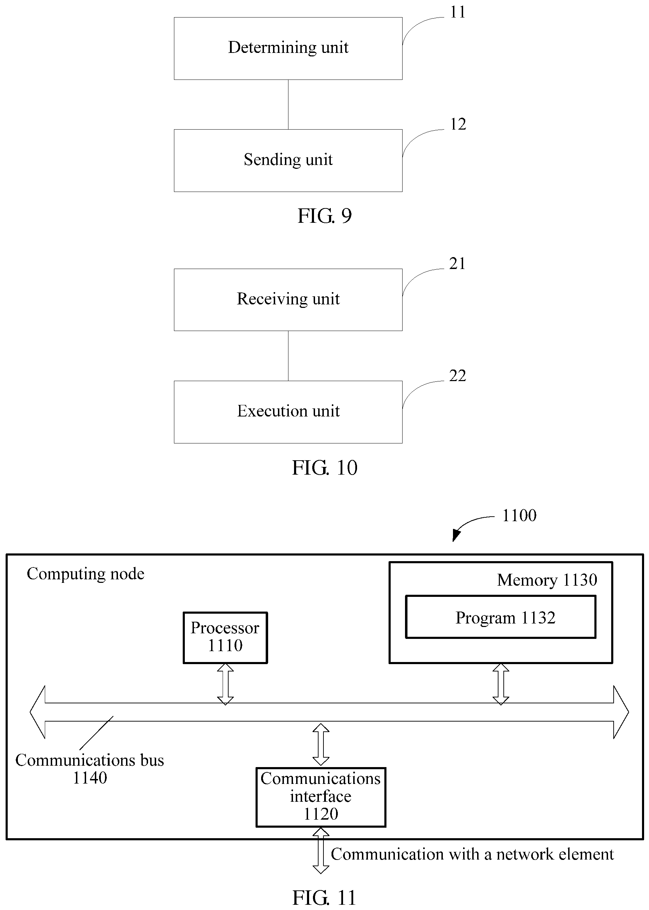

Referring to FIG. 9, FIG. 9 is a structural diagram of Embodiment 1 of a resource management apparatus disclosed in the present invention. The apparatus is applied to a primary orchestrator and specifically includes the following units:
a determining unit 11, configured to determine, by the primary orchestrator, resource management that is in a management domain of a secondary orchestrator and that needs to be performed by the secondary orchestrator; and
a sending unit 12, configured to send a resource management instruction to the secondary orchestrator, where the resource management instruction is used to instruct the secondary orchestrator to perform the resource management that is in the management domain of the secondary orchestrator and that needs to be performed by the secondary orchestrator.

The primary orchestrator and the secondary orchestrator have different management domains.

The sending unit is specifically configured to:
send an instruction for querying availability of a resource in the management domain of the secondary orchestrator to the secondary orchestrator; or
send an instruction for reserving a resource in the management domain of the secondary orchestrator to the secondary orchestrator; or
send a resource quota application or adjustment request to the secondary orchestrator; or
send a resource quota adjustment request to the secondary orchestrator.

It should be noted that the apparatus further includes:
a receiving unit, configured to receive a resource management result fed back by the secondary orchestrator.

Referring to FIG. 10, FIG. 10 is a structural diagram of Embodiment 2 of a resource management apparatus disclosed in the present invention. The apparatus is applied to a secondary orchestrator and specifically includes the following units:
a receiving unit 21, configured to receive, by the secondary orchestrator, a resource management instruction sent by a primary orchestrator, where the resource management instruction is used to instruct the secondary orchestrator to perform resource management that is in a management domain of the secondary orchestrator and that needs to be performed by the secondary orchestrator; and
an execution unit 22, configured to perform the resource management that is in the management domain of the secondary orchestrator and that needs to be performed by the secondary orchestrator.

The primary orchestrator and the secondary orchestrator have different management domains.

The receiving unit is specifically configured to:
receive, by the secondary orchestrator, an instruction for querying availability of a resource in the management domain of the secondary orchestrator that is sent by the primary orchestrator, where
the execution unit is specifically configured to: initiate, by the secondary orchestrator, the instruction for querying availability of a resource in the management domain of the secondary orchestrator to a VIM (virtualized infrastructure manager) in the management domain of the secondary orchestrator; and
receive a query result returned by the VIM in the management domain of the secondary orchestrator; and
the apparatus further includes:
   a first feedback unit, configured to feed back the query result to the primary orchestrator.

Alternatively, the receiving unit is specifically configured to:
receive, by the secondary orchestrator, an instruction for reserving a resource in the management domain of the secondary orchestrator that is sent by the primary orchestrator, where
the execution unit is specifically configured to:
   initiate, by the secondary orchestrator, the instruction for reserving a resource in the management domain of the secondary orchestrator to a VIM (virtualized infrastructure manager) in the management domain of the secondary orchestrator; and
   receive reserved resource information returned by the VIM in the management domain of the secondary orchestrator; and
the apparatus further includes:
   a second feedback unit, configured to feed back the reserved resource information to the primary orchestrator.

Alternatively, the receiving unit is specifically configured to:
receive, by the secondary orchestrator, a resource quota application request sent by the primary orchestrator, where
the execution unit is specifically configured to:
   send, by the secondary orchestrator, the resource quota application request to a VIM in the management domain of the secondary orchestrator;
   receive, by the secondary orchestrator, an allocated quota value returned by the VIM in the management domain of the secondary orchestrator; and
   feed back, by the secondary orchestrator, the allocated quota value to the primary orchestrator, so that after receiving a lifecycle management request, the primary orchestrator performs the resource management in the management domain of the secondary orchestrator according to the allocated quota value.

The receiving unit is specifically configured to:
receive, by the secondary orchestrator, a resource quota adjustment request sent by the primary orchestrator, where
the execution unit is specifically configured to send, by the secondary orchestrator, the resource quota adjustment request to a VIM in the management domain of the secondary orchestrator; and
receive, by the secondary orchestrator, an adjustment result returned by the VIM in the management domain of the secondary orchestrator.

It should be noted that specific function implementations of the foregoing units are described in detail in the method embodiments, and details are not described in this embodiment again. For details, refer to related descriptions in the method embodiments.

In addition, an embodiment of this application further provides a computing node. The computing node may be a host server having a computing capability, or a personal computer PC, or a portable computer or terminal that can be carried, or the like. A specific implementation of the computing node is not limited in the specific embodiment of this application.

FIG. 11 is a structural diagram of a computing node according to this application. As shown in FIG. 11, the computing node 1100 includes:
a processor (processor) 1110, a communications interface (Communications Interface) 1120, a memory (memory) 1130, and a bus 1140.

The processor 1110, the communications interface 1120, and the memory 1130 communicate with each other by using the bus 1140.

The processor 1110 is configured to execute a program 1132.

Specifically, the program 1132 may include program code, and the program code includes a computer operation instruction.

The processor 1110 may be a central processing unit CPU, or an application-specific integrated circuit ASIC (Application Specific Integrated Circuit), or one or more integrated circuits configured to implement the embodiments of this application.

The memory 1130 is configured to store the program 1132. The memory 1130 may include a high-speed RAM memory, and may further include a non-volatile memory (non-volatile memory), for example, at least one magnetic disk memory. The program 1132 may specifically include:
related steps of the methods described in the embodiments corresponding to FIG. 4 to FIG. 10.

For specific implementations of modules in the program 1132, refer to corresponding units in the embodiments shown in FIG. 9 and FIG. 10, and details are not described herein.

The embodiments in this specification are all described in a progressive manner, for same or similar parts in the embodiments, refer to these embodiments, and each embodiment focuses on a difference from other embodiments. The apparatus disclosed in the embodiments is described relatively briefly because it corresponds to the method disclosed in the embodiments, and for portions related to those of the method, refer to the description of the method.

A person skilled in the art may further be aware that, in combination with the examples described in the embodiments disclosed in this specification, units and algorithm steps may be implemented by electronic hardware or a combination of computer software and electronic hardware. To clearly describe the interchangeability between the hardware and the software, the foregoing has generally described compositions and steps of each example according to functions. Whether the functions are performed by hardware or software and hardware depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The embodiments disclosed above are described to enable a person skilled in the art to implement or use the present invention. Various modifications to the embodiments are obvious to the person skilled in the art, and general principles defined in this specification may be implemented in other embodiments without departing from the scope of the present invention. Therefore, the present invention will not be limited to the embodiments described in this specification but extends to the widest scope that complies with the principles and novelty disclosed in this specification.

## Claims

1. A resource management method, wherein the method comprises:
determining, by a primary orchestrator, resource management that is in a management domain of a secondary orchestrator and that needs to be performed by the secondary orchestrator; and
sending a resource management instruction to the secondary orchestrator, wherein the resource management instruction is used to instruct the secondary orchestrator to perform the resource management that is in the management domain of the secondary orchestrator and that needs to be performed by the secondary orchestrator, wherein
the primary orchestrator and the secondary orchestrator have different management domains.

2. The method according to claim 1, wherein the sending a resource management instruction to the secondary orchestrator specifically comprises:
sending an instruction for querying availability of a resource in the management domain of the secondary orchestrator to the secondary orchestrator.

3. The method according to claim 1, wherein the sending a resource management instruction to the secondary orchestrator specifically comprises:
sending an instruction for reserving a resource in the management domain of the secondary orchestrator to the secondary orchestrator.

4. The method according to claim 1, wherein the sending a resource management instruction to the secondary orchestrator specifically comprises:
sending a resource quota application request to the secondary orchestrator.

5. The method according to claim 1, wherein the sending a resource management instruction to the secondary orchestrator specifically comprises:
sending a resource quota adjustment request to the secondary orchestrator.

6. The method according to any one of claims 1 to 5, wherein after the sending a resource management instruction to the secondary orchestrator, the method further comprises:
receiving a resource management result fed back by the secondary orchestrator.

7. A resource management method, wherein the method comprises:
receiving, by a secondary orchestrator, a resource management instruction sent by a primary orchestrator, wherein the resource management instruction is used to instruct the secondary orchestrator to perform resource management that is in a management domain of the secondary orchestrator and that needs to be performed by the secondary orchestrator; and
performing the resource management that is in the management domain of the secondary orchestrator and that needs to be performed by the secondary orchestrator, wherein
the primary orchestrator and the secondary orchestrator have different management domains.

8. The method according to claim 7, wherein the receiving, by a secondary orchestrator, a resource management instruction sent by a primary orchestrator specifically comprises:
receiving, by the secondary orchestrator, an instruction for querying availability of a resource in the management domain of the secondary orchestrator that is sent by the primary orchestrator.

9. The method according to claim 8, wherein the performing the resource management that is in the management domain of the secondary orchestrator and that needs to be performed by the secondary orchestrator specifically comprises:
initiating, by the secondary orchestrator, the instruction for querying availability of a resource in the management domain of the secondary orchestrator to a VIM (virtualized infrastructure manager) in the management domain of the secondary orchestrator; and
receiving a query result returned by the VIM in the management domain of the secondary orchestrator.

10. The method according to claim 9, wherein after the receiving a query result returned by the VIM in the management domain of the secondary orchestrator, the method further comprises:
feeding back the query result to the primary orchestrator.

11. The method according to claim 7, wherein the receiving, by a secondary orchestrator, a resource management instruction sent by a primary orchestrator specifically comprises:
receiving, by the secondary orchestrator, an instruction for reserving a resource in the management domain of the secondary orchestrator that is sent by the primary orchestrator.

12. The method according to claim 11, wherein the performing the resource management that is in the management domain of the secondary orchestrator and that needs to be performed by the secondary orchestrator specifically comprises:
initiating, by the secondary orchestrator, the instruction for reserving a resource in the management domain of the secondary orchestrator to a VIM (virtualized infrastructure manager) in the management domain of the secondary orchestrator; and
receiving reserved resource information returned by the VIM in the management domain of the secondary orchestrator.

13. The method according to claim 12, wherein after the receiving reserved resource information returned by the VIM in the management domain of the secondary orchestrator, the method further comprises:
feeding back the reserved resource information to the primary orchestrator.

14. The method according to claim 7, wherein the receiving, by a secondary orchestrator, a resource management instruction sent by a primary orchestrator specifically comprises:
receiving, by the secondary orchestrator, a resource quota application request sent by the primary orchestrator.

15. The method according to claim 14, wherein the performing the resource management that is in the management domain of the secondary orchestrator and that needs to be performed by the secondary orchestrator specifically comprises:
sending, by the secondary orchestrator, the resource quota application request to a VIM in the management domain of the secondary orchestrator;
receiving, by the secondary orchestrator, an allocated quota value returned by the VIM in the management domain of the secondary orchestrator; and
feeding back, by the secondary orchestrator, the allocated quota value to the primary orchestrator, so that after receiving a lifecycle management request, the primary orchestrator performs the resource management in the management domain of the secondary orchestrator according to the allocated quota value.

16. The method according to claim 7, wherein the receiving, by a secondary orchestrator, a resource management instruction sent by a primary orchestrator specifically comprises:
receiving, by the secondary orchestrator, a resource quota adjustment request sent by the primary orchestrator.

17. The method according to claim 16, wherein the performing the resource management that is in the management domain of the secondary orchestrator and that needs to be performed by the secondary orchestrator specifically comprises:
sending, by the secondary orchestrator, the resource quota adjustment request to a VIM in the management domain of the secondary orchestrator; and
receiving, by the secondary orchestrator, an adjustment result returned by the VIM in the management domain of the secondary orchestrator.

18. A resource management apparatus, wherein the apparatus comprises:
a determining unit, configured to determine, by a primary orchestrator, resource management that is in a management domain of a secondary orchestrator and that needs to be performed by the secondary orchestrator; and
a sending unit, configured to send a resource management instruction to the secondary orchestrator, wherein the resource management instruction is used to instruct the secondary orchestrator to perform the resource management that is in the management domain of the secondary orchestrator and that needs to be performed by the secondary orchestrator, wherein
the primary orchestrator and the secondary orchestrator have different management domains.

19. The apparatus according to claim 18, wherein the sending unit is specifically configured to:
send an instruction for querying availability of a resource in the management domain of the secondary orchestrator to the secondary orchestrator.

20. The apparatus according to claim 18, wherein the sending unit is specifically configured to:
send an instruction for reserving a resource in the management domain of the secondary orchestrator to the secondary orchestrator.

21. The apparatus according to claim 18, wherein the sending unit is specifically configured to:
send a resource quota application request to the secondary orchestrator.

22. The apparatus according to claim 18, wherein the sending unit is specifically configured to:
send a resource quota adjustment request to the secondary orchestrator.

23. The apparatus according to any one of claims 18 to 22, wherein the apparatus further comprises:
a receiving unit, configured to receive a resource management result fed back by the secondary orchestrator.

24. A resource management apparatus, wherein the apparatus comprises:
a receiving unit, configured to receive, by a secondary orchestrator, a resource management instruction sent by a primary orchestrator, wherein the resource management instruction is used to instruct the secondary orchestrator to perform resource management that is in a management domain of the secondary orchestrator and that needs to be performed by the secondary orchestrator; and
an execution unit, configured to perform the resource management that is in the management domain of the secondary orchestrator and that needs to be performed by the secondary orchestrator, wherein
the primary orchestrator and the secondary orchestrator have different management domains.

25. The apparatus according to claim 24, wherein the receiving unit is specifically configured to:
receive, by the secondary orchestrator, an instruction for querying availability of a resource in the management domain of the secondary orchestrator that is sent by the primary orchestrator.

26. The apparatus according to claim 25, wherein the execution unit is specifically configured to:
initiate, by the secondary orchestrator, the instruction for querying availability of a resource in the management domain of the secondary orchestrator to a VIM (virtualized infrastructure manager) in the management domain of the secondary orchestrator; and
receive a query result returned by the VIM in the management domain of the secondary orchestrator.

27. The apparatus according to claim 26, wherein the apparatus further comprises:
a first feedback unit, configured to feed back the query result to the primary orchestrator.

28. The apparatus according to claim 24, wherein the receiving unit is specifically configured to:
receive, by the secondary orchestrator, an instruction for reserving a resource in the management domain of the secondary orchestrator that is sent by the primary orchestrator.

29. The apparatus according to claim 28, wherein the execution unit is specifically configured to:
initiate, by the secondary orchestrator, the instruction for reserving a resource in the management domain of the secondary orchestrator to a VIM (virtualized infrastructure manager) in the management domain of the secondary orchestrator; and
receive reserved resource information returned by the VIM in the management domain of the secondary orchestrator.

30. The method according to claim 29, wherein the apparatus further comprises:
a second feedback unit, configured to feed back the reserved resource information to the primary orchestrator.

31. The apparatus according to claim 24, wherein the receiving unit is specifically configured to:
receive, by the secondary orchestrator, a resource quota application request sent by the primary orchestrator.

32. The apparatus according to claim 31, wherein the execution unit is specifically configured to:
send, by the secondary orchestrator, the resource quota application request to a VIM in the management domain of the secondary orchestrator;
receive, by the secondary orchestrator, an allocated quota value returned by the VIM in the management domain of the secondary orchestrator; and
feed back, by the secondary orchestrator, the allocated quota value to the primary orchestrator, so that after receiving a lifecycle management request, the primary orchestrator performs the resource management in the management domain of the secondary orchestrator according to the allocated quota value.

33. The apparatus according to claim 24, wherein the receiving unit is specifically configured to:
receive, by the secondary orchestrator, a resource quota adjustment request sent by the primary orchestrator.

34. The method according to claim 33, wherein the execution unit is specifically configured to send, by the secondary orchestrator, the resource quota adjustment request to a VIM in the management domain of the secondary orchestrator; and
receive, by the secondary orchestrator, an adjustment result returned by the VIM in the management domain of the secondary orchestrator.
